# EUROPEAN PATENT APPLICATION

(11) **EP 2 765 482 A1**
(43) Date of publication of application: **13.08.2014**
(21) Application number: 13193480.4
(22) Date of filing: 19.11.2013
(51) Int. Cl.: G06F 1/32

(54) **Handheld electronic apparatus and operation method thereof**

(30) Priority: 29.11.2012 US 201213688771
(71) Applicant: HTC Corporation, Taoyuan County 330 (TW)
(72) Inventor: Lin, Shang-I, 330 Taoyuan City (TW)
(74) Representative: Harrasz, Julia Konstanze

(57) **Abstract**

A handheld electronic apparatus and operation methods thereof are provided. The handheld electronic apparatus comprises a button, a processor, and a sensor. The button is configured to generate an interrupt signal when being triggered. The processor is electrically connected to the button and configured to generate an event signal in response to the interrupt signal. The sensor is electrically connected to the processor, and configured to be turned on in response to the event signal and generate a sensed signal. The processor is further configured to generate a comparison result by comparing the sensed signal with a threshold, and determine whether the button is triggered intentionally or accidentally according to the comparison result.

## Description

### BACKGROUND

### Technical Field

The embodiment of the present invention relates to a handheld electronic apparatus and an operation method thereof. More particularly, the handheld electronic apparatus and the operation method provided by the present invention can determine whether a button of the handheld electronic apparatus is activated intentionally or accidentally.

### Descriptions of the Related Art

As technology progresses, handheld electronic apparatuses, such as mobile phones, personal digital assistants (PDAs), MP3 players, cameras, have become indispensable products in the daily life. To prevent from carrying several devices at the same time, developers/designers have combined various devices into one single handheld electronic apparatus. For example, most mobile phones on the market today are equipped with a camera module.

For a handheld electronic apparatus that has an additional module, a button is usually designed to quickly start that additional module. For example, a mobile phone that is equipped with a camera module usually has a shutter button for starting the camera module. However, there are occasions that the button may be accidentally activated (e.g. when the handheld electronic apparatus is placed in a bag, the button may be pressed by something in the bag), which causes the additional module being turned on accidently. As a consequence, the power and/or resources of the handheld electronic apparatus are wasted.

Accordingly, a solution that can prevent the handheld electronic apparatus from being unexpectedly turned on is in an urgent need in this filed.

### SUMMARY

To solve the aforementioned problems, the present invention provides a handheld electronic apparatus and operation methods thereof according to the independent claims.

The handheld electronic apparatus of the present invention comprises a button, a processor, and a sensor. The button is configured to generate an interrupt signal when being triggered. The processor is electrically connected to the button and configured to generate an event signal in response to the interrupt signal. The sensor is electrically connected to the processor and turned on in response to the event signal. The sensor is configured to generate a sensed signal when turned on. The processor is further configured to generate a comparison result by comparing the sensed signal and a threshold, and determine whether the button is triggered intentionally or accidentally according to the comparison result.

An embodiment of a method of the present invention may be used in a handheld electronic apparatus. The method comprises the following steps of: (a) generating an interrupt signal in response to a button of the handheld electronic apparatus being triggered, (b) turning on a sensor of the handheld electronic apparatus in response to the interrupt signal, (c) generating a sensed signal by the sensor, (d) generating a comparison result by comparing the sensed signal and a threshold, and (e) determining whether the button is triggered intentionally according to the comparison result.

Yet another method of the present invention may be used in a handheld electronic apparatus. The method comprises the following steps of: (a) determining whether a hardware input unit of the handheld electronic apparatus is triggered, (b) receiving a sensed signal from at least one sensor of the handheld electronic apparatus, (c) generating at least one comparison result by comparing the at least one sensed signal and at least one predetermined threshold, and (d) activating an application module corresponding to the hardware input device according to the comparison result.

The sensor of the handheld electronic apparatus is able to generate a sensed signal by sensing the ambient environment (e.g. an ambient light sensing the lighting condition of the environment) or by sensing the condition of the handheld electronic apparatus (e.g. a g-sensor sensing the moving condition of the handheld electronic apparatus). Hence, the sensed signal is able to represent the condition of the handheld electronic apparatus. With this characteristic, the handheld electronic apparatus and the method thereof of the present invention is able to determine whether a hardware input unit is triggered intentionally or accidentally according to the sensed signal. Therefore, when a button of the handheld electronic apparatus is triggered accidentally, the handheld electronic apparatus can perform appropriate operations to prevent from being unexpectedly turned on.

The detailed technology and preferred embodiments implemented for the present invention are described in the following paragraphs accompanying the appended drawings for people skilled in this field to well appreciate the features of the claimed invention.

### BRIEF DESCRIPTION OF THE DRAWINGS

FIG. 1 is a schematic view of a handheld electronic apparatus of a first embodiment of the present invention;
FIG. 2 is a schematic view of a handheld electronic apparatus of a second embodiment of the present invention;
FIG. 3 is a schematic view of a handheld electronic apparatus of a third embodiment of the present invention;
FIGs. 4A and 4B illustrate a flowchart diagram of a method of a fourth embodiment of the present invention; and
FIGs. 5A and 5B illustrate a flowchart diagram of a method of a fifth embodiment of the present invention.

### DESCRIPTION OF THE PREFERRED EMBODIMENT

In the following description, the present invention will be explained with reference to embodiments thereof. However, these embodiments are not intended to limit the present invention to any specific environment, applications, or particular implementations described in these embodiments. Therefore, description of these embodiments is only for purpose of illustration rather than to limit the present invention. It should be appreciated that, in the following embodiments and the attached drawings, elements unrelated to the present invention are omitted from depiction.

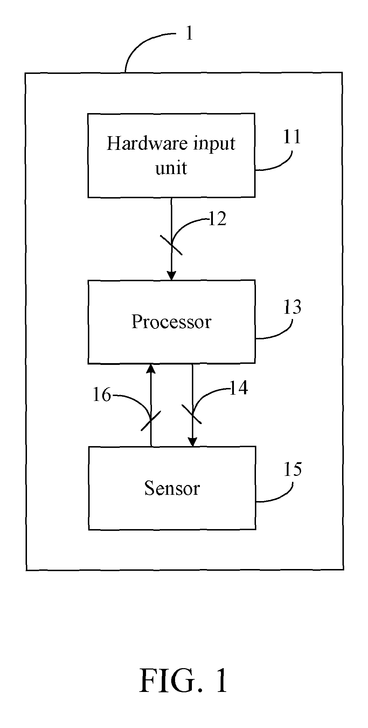

A first embodiment of the present invention is a handheld electronic apparatus 1 and a schematic view of which is depicted in FIG. 1. The handheld electronic apparatus comprises a hardware input unit 11, a processor 13, and a sensor 15, wherein the processor 13 is electrically connected to the hardware input unit 11 and the sensor 15. The processor 13 may be any of various processors, central processing units (CPUs), microprocessors, or other computing devices that are well-known by those of ordinary skill in the art. The hardware input unit 11 may be a hardware button, key, sensor or any suitable input unit that may be triggered by user. The hardware input unit 11 may also be external to the handheld electronic apparatus 1, and connects to the handheld electronic apparatus 1 wirelessly, for example a Bluetooth device.

When the hardware input unit 11 is triggered (for example a button is pressed), the hardware input unit 11 generates an interrupt signal 12. The interrupt signal 12 is transmitted to the processor 13. The processor 13 generates an event signal 14 in response to receiving the interrupt signal 12. The sensor 15 is turned on by the event signal 14. After being turned on, the sensor 15 generates a sensed signal 16 and sends the sensed signal 16 to the processor 13. Accordingly, the processor 13 generates a comparison result by comparing the sensed signal 16 with a threshold (not shown). The processor 13 then determines whether the hardware input unit 11 is triggered intentionally or accidentally based on the comparison result, and thus determines whether to activate an application module (not shown) corresponding to the interrupt signal 12 and/or other units related to the operation of the application module.

It is noted that the hardware input unit 11 may be configured to correspond to multiple modules (not shown) in the handheld electronic apparatus 1 by different trigger mechanisms. In another embodiment, the handheld electronic apparatus 1 may comprise multiple hardware input unit 11. Depending on what application module the hardware input unit 11 being triggered corresponds to, the processor 13 may perform different operations based on the determination result. For example, if it is determined that the hardware input unit 11 is triggered accidentally, the processor 13 may keep the application module corresponding to the hardware input unit 11 in an off status. On the other hand, if it is determined that the hardware input unit 11 is triggered intentionally, the processor 13 may turn on the application module corresponding to the hardware input unit 11. Furthermore, if the operation of the application module requires operation of other modules or units, related modules and/or units may be turn on as well by the processor 13. It is noted that the application module corresponding to the hardware input unit 11 may be a camera module, a phone dial module, a media play module and/or others. In the embodiment that the application module is camera module, related module/unit to be turned on is display unit to provide preview of images. In the embodiment that the application module is a media play module, related units to be turned on are display unit and audio output unit. Other embodiments might involve various modules and units and are covered in the scope of the present invention.

The aforementioned sensor 15 may be an ambient light sensor, a proximity sensor, any other sensor that is able to sense a condition of the handheld electronic apparatus 1 itself, or any other sensor that is able to sense an ambient condition. For example, when the sensor 15 is an ambient light sensor, the ambient light sensor generates the sensed signal 16 by sensing a piece of ambient light above a predetermined threshold. Yet another example, when the sensor 15 is a proximity sensor, the sensed signal 16 generated by the proximity sensor carries a piece of distance information.

According to the above descriptions, it is learned that the handheld electronic apparatus 1 of the first embodiment can determine whether the hardware input unit 11 is triggered intentionally or accidentally based on the environment condition indicated by the sensed signal. With the knowledge of the hardware input unit 11 being triggered intentionally or accidentally, the handheld electronic apparatus 1 is able to take appropriate actions on the application module that is related to the hardware input unit 11.

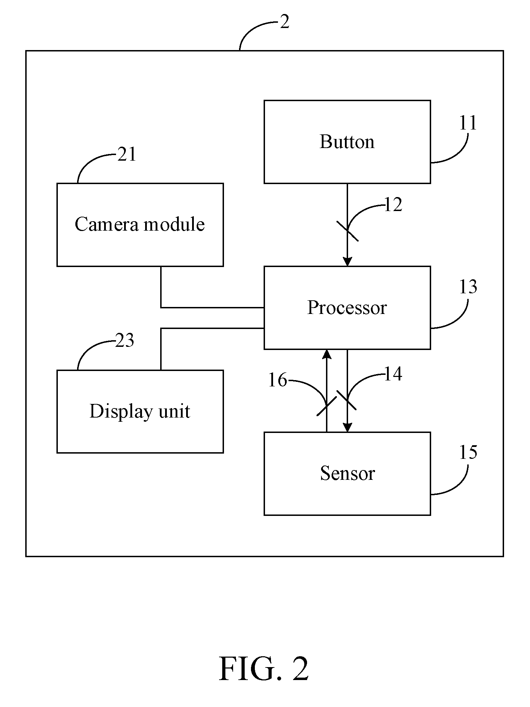

A second embodiment of the present invention is a handheld electronic apparatus 2 and a schematic view of which is depicted in FIG. 2. The handheld electronic apparatus 2 comprises a hardware button 11, a processor 13, a sensor 15, a camera module 21, and a display unit 23. The button 11, the processor 13, and the sensor 15 comprised in the handheld electronic apparatus 2 perform similar operations as those comprised in the handheld electronic apparatus 1 of the first embodiment. Hence, the following descriptions will be focused on the additional operations of the handheld electronic apparatus 2.

In the second embodiment, both the camera module 21 and the display unit 23 are electrically connected to the processor 13. The button 11 is used for operating the camera module 21. For example, the button 11 may be a shutter button of the camera module 21.

As a first example, it is assumed that the sensor 15 is an ambient light sensor. When the button 11 is triggered, the processor 13 turns on the sensor 15 by the event signal 14. The sensor 15 senses a piece of ambient light surrounding the handheld electronic apparatus 2, and generates the sensed signal 16 according to the piece of ambient light. The sensed signal 16 may indicate a level of the piece of ambient light. The processor 13 generates a comparison result by comparing the sensed signal 16 with a threshold in order to determine whether the button 11 is triggered intentionally or accidentally. The threshold may be adjusted by a user of the handheld electronic apparatus 2 or be a default value. For example, the threshold may be a value close to zero. Under this circumstance, when the sensed signal 16 is smaller than the threshold, it means that the handheld electronic apparatus 2 is in a dark place (for example in a purse). Consequently, the processor 13 determines that the button 11 is triggered accidentally. In the case that the sensed signal 16 is equal or greater than the threshold, which means handheld electronic apparatus 2 is in a brighter place and the user might wish to take photos, the processor 13 determines that the button 11 is triggered to activate camera module 21, and thus turns on the camera module 21.

As a second example, it is assumed that the sensor 15 is a proximity sensor. In this case, the threshold may be set to a value close to zero, or predefined value as well. Under this circumstance, when the sensed signal 16 is smaller than the threshold, it means that a lens of the camera module 21 is covered with something (for example fingers). Therefore, the processor 13 determines that the button 11 is triggered accidentally.

When the processor 13 determines that the button 11 is triggered accidentally, the processor 13 keeps the camera module 21 in an off status and turns off the sensor l5.Similarly, the display unit 23 is kept in off status if it is not turn on previously. On the contrary, when the processor 13 determines that the button 11 is triggered intentionally, the processor 13 performs the following operations. First, the processor 13 turns on the camera module 21. Then, if the display unit 23 has not been turned on, the processor 13 turns on the display unit 23 and unlocks the handheld electronic apparatus 2. Afterwards, the processor 13 enables the display unit 23 to enter a preview mode of the camera module 21. To save the power of the handheld electronic apparatus 2, the processor 13 may further turn off the sensor 15. Thereafter, the user can begin to use the camera function of the handheld electronic apparatus 2.

According to the above descriptions, by using the characteristics of the sensor 15, the handheld electronic apparatus 2 can manage to activate camera module 21 in normal when the button is triggered intentionally, and keep the camera module 21 in an off status when the button is triggered accidentally. Therefore, the inconveniences caused by accidentally triggering the button 11 can be avoided, and thus saves the power consumption wasted by wrong activation of camera module 21 and display unit 23. It should be noted that the present invention is not limited to the embodiment of the camera module, and other application module that may benefit from fast launch by hardware button may also be included in the embodiments of the present invention.

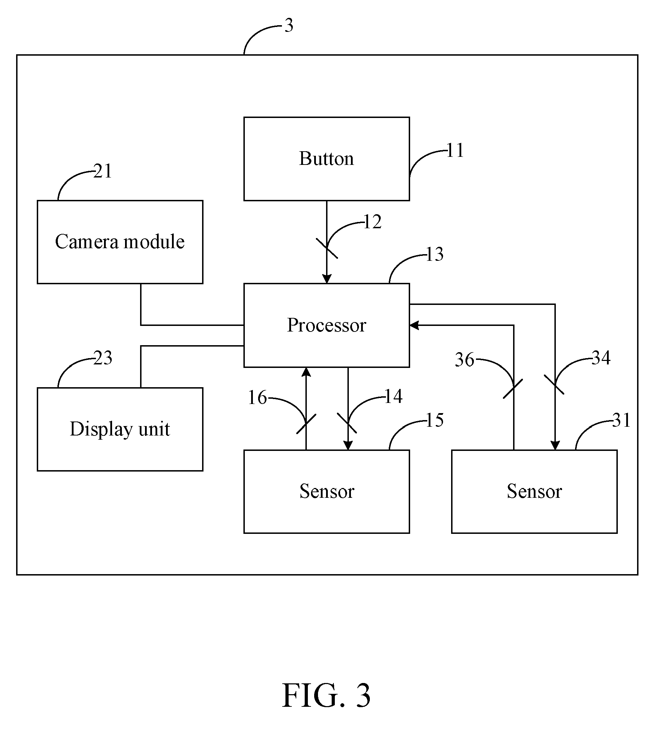

A third embodiment of the present invention is a handheld electronic apparatus 3 and a schematic view of which is depicted in FIG. 3. The handheld electronic apparatus 3 comprises a button 11, a processor 13, two sensors 15, 31, a camera module 21, and a display unit 23. The button 11, the processor 13, the sensor 15, 31, the camera module 21, and the display unit 23 perform similar operations as those comprised in the handheld electronic apparatus 2. Hence, the following descriptions will be focused on the additional operations of the handheld electronic apparatus 3.

Like the aforementioned embodiments, the button 11 generates an interrupt signal 12 when being triggered. In this embodiment, the processor 13 generates two event signals 14, 34 corresponding to sensors 15, 31 respectively in response to the interrupt signal 12. The sensor 31 is electrically connected to the processor 13, turned on by the event signal 34, and configured to generate a sensed signal 36 after being turned on. The processor 13 generates a comparison result by comparing the sensed signal 36 with a threshold (no shown) of the sensor 31. Similarly, the sensor 15 receives event signal 14 and generates sensed signal 16 accordingly. For convenience, the comparison result between the sensed signal 16 and the threshold of the sensor 15 is called "the first comparison result", while the comparison result between the sensed signal 36 and the threshold of the sensor 31 is called "the second comparison result".

Afterwards, the processor 13 determines whether the button 11 is triggered intentionally or accidentally based on combination of the first comparison result and the second comparison result. For instance, the processor 13 may take both the first comparison result and the second comparison result into consideration. That is, the processor 13 determines that the button is triggered intentionally only when both the first comparison result and the second comparison result indicate that the button 11 is triggered intentionally, and vice versa. After the processor 13 determines whether the button is triggered intentionally or accidentally, the processor 13, the camera module 21, and the display unit 23 will perform the same operations as addressed in the second embodiment.

According to the above descriptions, it is learned that that the handheld electronic apparatus 3 can determine whether the button is triggered intentionally or accidentally by using two sensors 15, 31.

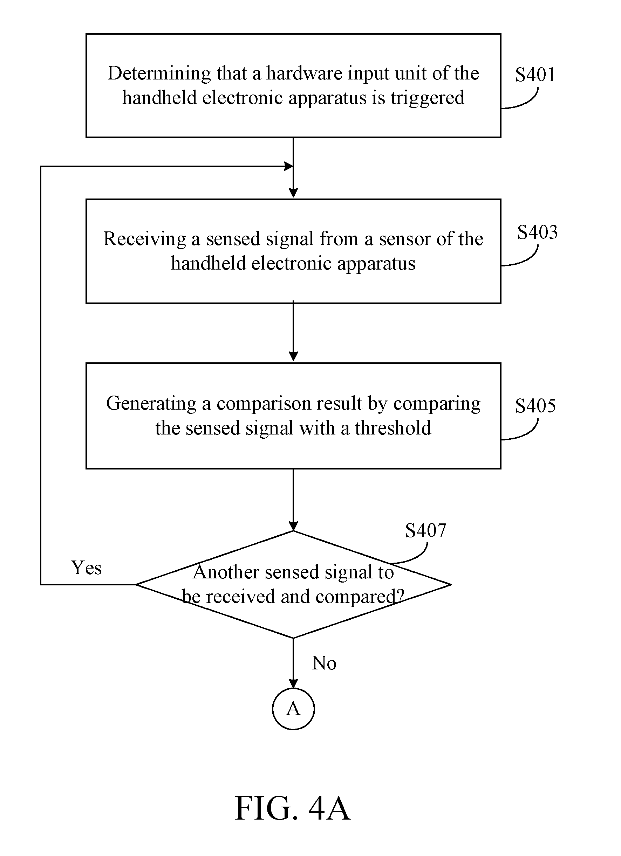

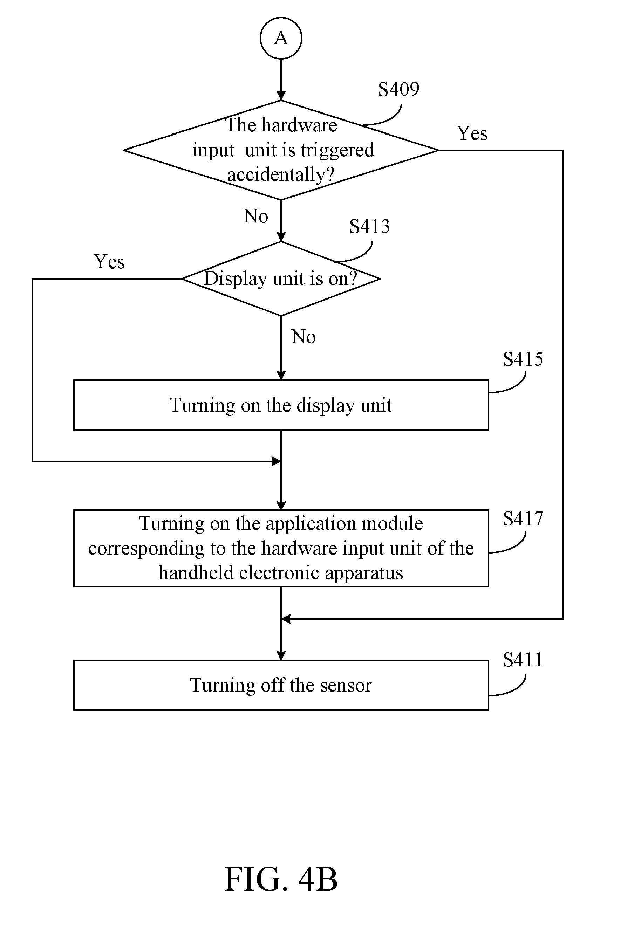

A fourth embodiment of the present invention is a method for activating an application of a handheld electronic apparatus. The flowchart diagram of which is depicted in FIG. 4A and FIG. 4B. The method is adapted for use in a handheld electronic apparatus, which may be a mobile phone, tablet, game console, media player and/or other devices.

Firstly, step S401 is executed to determine that a hardware input unit of the handheld electronic apparatus is triggered. Then, step S403 is executed to receive a sensed signal from a sensor of the handheld electronic apparatus in response to the trigger of the hardware input unit. After that, step S405 is executed to generate a comparison result by comparing the sensed signal with a predetermined threshold. It is noted that the threshold is determined according to the type of the sensor and/or requirements of the user.

Step S407 is executed in the next step to determine whether there is another sensed signal need to be received and compared. If it is yes, the method executes the steps S403, S405, and S407 again. It is noted that the threshold in step S405 may be different for sensed signals from different sensors. It should also be noted that the steps S403 to S405 may be performed in parallel for each sensor in the case that more than one sensor is used for determination.

If the determination result of step S407 is no (i.e. all comparison result(s) has been derived), then step S409 is executed for determining whether the hardware input unit is triggered intentionally or accidentally based on the at least one comparison result.

In the case that the step S411 determines that the hardware input unit is triggered accidentally, the method executes step S413 to turn off the sensor(s) that was/were turned on in the step S403. If the hardware input unit is triggered intentionally (i.e. meaning that the user intends to use the camera module of the handheld electronic apparatus), the method executes step S415 to determine whether the display unit is already on. If the display unit has not been turned on, the method executes step S417 to turn on the display unit. Afterwards, the method executes step S419 to turn on the application module corresponding to the hardware input unit of the handheld electronic apparatus. Then, the method further executes step S413 to turn off the sensor(s) that was/were turned on in the step S403. If the step S415 determines that the display unit is already on, then the method directly executes steps S419 and S413. Thereafter, the user can use the function of the application module.

Furthermore, other units and/or modules related to the operations of the application module may be activated as well to support execution of the application module. The units and/or modules may be hardware or software implemented within the handheld electronic apparatus. Upon activation of the application module, the method may further perform a predetermined operation automatically. For example, if the application module is a camera module, a single image frame or a plurality of image frames may be captured instantly upon activation of the camera module. In another example, if the application module is a media player module, a media file may be played back automatically. The media file may be selected by a predetermined rule. The predetermined operation may be configurable by a user, such as auto capture of a single shot, auto video recording of current scene, or auto playback of previous played music track, and/or others.

In addition to the aforesaid steps, the fourth embodiment can execute all the operations and functions set forth in the first, the second, and the third embodiments. How the fourth embodiment executes these operations and functions will be readily appreciated by those of ordinary skill in the art based on the explanation of the first, the second, and third embodiments, and thus will not be further described therein.

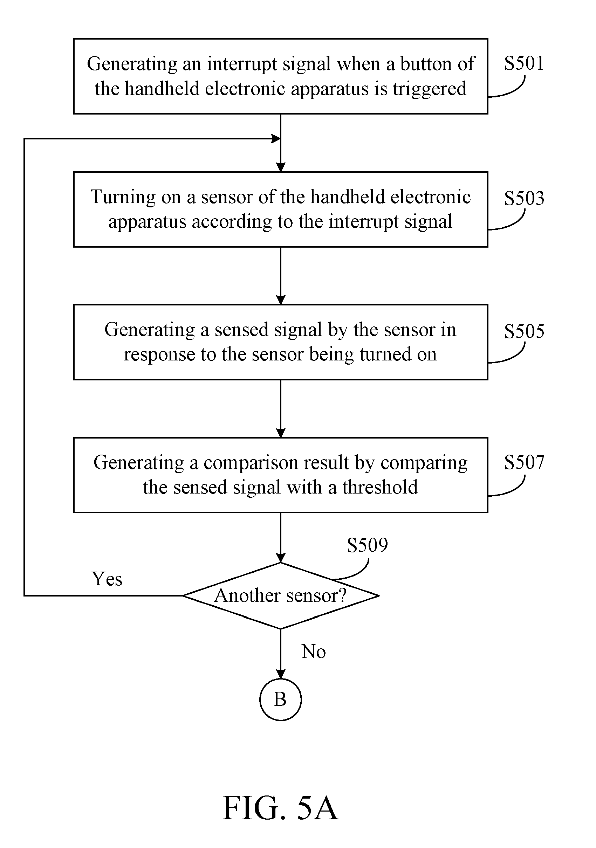

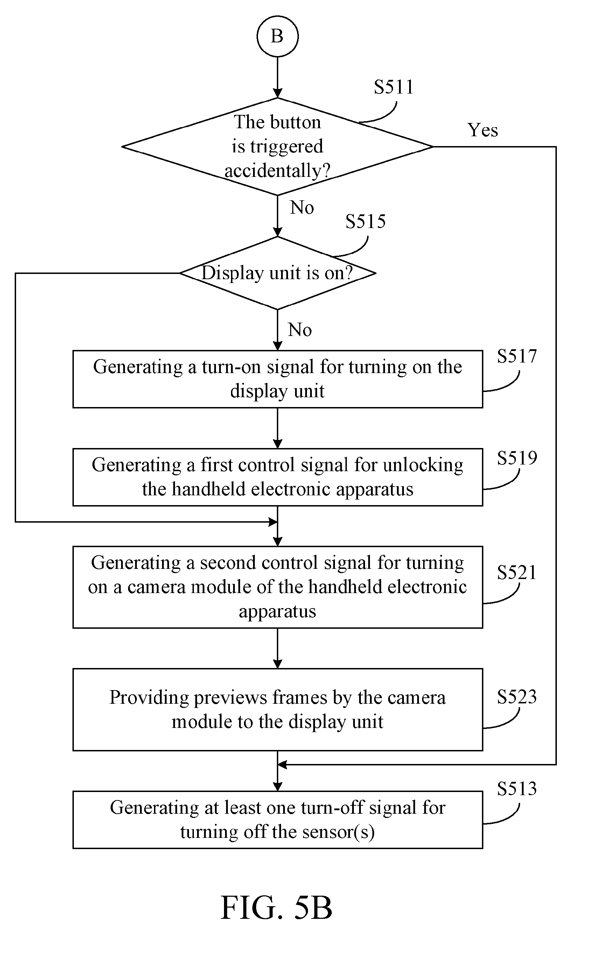

A fifth embodiment of the present invention is an operation method for a processor within a handheld electronic apparatus, a flowchart diagram of which is depicted in FIG. 5. The handheld electronic apparatus may be the ones in the first, the second, and the third embodiments.

Firstly, step S501 is executed to generate an interrupt signal when a hardware button of the handheld electronic apparatus is triggered. Then, step S503 is executed to turn on a sensor of the handheld electronic apparatus according to the interrupt signal. In response to the sensor being turned on, step S505 is executed to generate a sensed signal by the sensor. In the case that the sensor is an ambient light sensor, step S505 generates the sensed signal by sensing a piece of ambient light. In the case that the sensor is a proximity sensor, the sensed signal carries a piece of distance information. Next, step S507 is executed to generate a comparison result by comparing the sensed signal and a threshold. It is noted that the threshold may be determined according to the type of the sensor and/or requirement of the user.

Step S509 is executed in the next step. If there is another sensor in the handheld electronic apparatus being set as a determining sensor as well, the operation method executes the steps S503, S505, S507, and S509 again. It is noted that the threshold in step S507 may be different for different sensors. In addition, in other embodiments, different sensors can be turned on and operate at the same time. It should also be noted that the steps S503 to S507 may be performed in parallel for each sensor in the case that more than one sensor is used for determination.

When the step S511 determines that the button is triggered accidentally, the method proceeds to step S513 to generate at least one turn-off signal for turning off the sensor(s). If the step S511 determines that the button is triggered intentionally, the operation method executes step S515 to determine whether the display unit is already on. If the display unit is off, step S517 is executed for generating a turn-on signal for turning on the display unit. Then, step S519 is executed for generating a first control signal to unlock the handheld electronic apparatus. Most handheld electronic apparatus would lock the display unit from further operation when the handheld electronic apparatus is waken up from an idle state (screen off) to provide better security. To unlock the handheld electronic apparatus, an unlock operation has to be perform on a lock screen shown on the display unit. The unlock operation may be implemented by gesture, pin code, pattern and/or others. Step S519 may be performed by bypassing the unlock operation to save the time required to unlock the handheld electronic apparatus, and thus to achieve the purpose of fast launch. Afterwards, the operation method executes step S521 to generate a second control signal for turning on a camera module of the handheld electronic apparatus. Then, the operation method executes step S523 to provide preview image frames by the camera module to the display unit. Finally, step S513 is executed to generate at least one turn-off signal for turning off the sensor(s). It is noted that if step S515 determines that the display unit is already on, the operation method will directly execute steps S521, S523, and S513.

In addition to the aforesaid steps, the fifth embodiment can execute all the operations and functions set forth for the processor 13 in the first, the second, and the third embodiments. How the fifth embodiment executes these operations and functions will be readily appreciated by those of ordinary skill in the art based on the explanation of the first, the second, and third embodiments, and thus will not be further described therein.

According to the above embodiments, it is learned that the present invention utilizes the sensor(s) equipped in the handheld electronic apparatus to determine whether the hardware input unit of the handheld electronic apparatus is triggered intentionally or accidentally. Depending on the type of the additional module (e.g. camera module), the type of the sensor, and/or the requirement of the user, different thresholds can be set to be compared with the sensed signal(s). Therefore, when the hardware input unit is triggered accidentally, the handheld electronic apparatus can perform appropriate operations to prevent from being unexpectedly turned on. Resources and/or power of the handheld electronic apparatus will not be wasted.

The above disclosure is related to the detailed technical contents and inventive features thereof. People skilled in this field may proceed with a variety of modifications and replacements based on the disclosures and suggestions of the invention as described without departing from the characteristics thereof. Nevertheless, although such modifications and replacements are not fully disclosed in the above descriptions, they have substantially been covered in the following claims as appended.

## Claims

1. A handheld electronic apparatus, comprising:
a button, configured to generate an interrupt signal in response to being triggered;
a processor, electrically connected to the button and configured to generate a first event signal in response to the interrupt signal; and
a first sensor, electrically connected to the processor, and configured to be turned on in response to the first event signal and generate a first sensed signal;
wherein the processor is configured to generate a first comparison result by comparing the first sensed signal with a first threshold, and determine whether the button is triggered intentionally or accidentally according to the first comparison result; and
wherein the processor is further configured to turn off the first sensor in response to the button is determined as triggered accidentally.

2. The handheld electronic apparatus of claim 1, further comprising:
a camera module, electrically connected to the processor, and configured to capture image frames; and
a display unit, electrically connected to the processor;
wherein the camera module and the display unit are turn on in response to the button being determined as triggered intentionally, and wherein the display unit provides preview of the image frames received from the camera module.

3. The handheld electronic apparatus of claim 3, wherein the processor is further configured to turn on the display unit and unlock the handheld electronic apparatus automatically and wherein the processor is further configured to turn off the first sensor in response to the display unit is turned on.

4. The handheld electronic apparatus of claim 1, wherein the first sensor is selected from at least one of the following: an ambient light sensor, the ambient light sensor generates the first sensed signal by sensing a piece of ambient light; and a proximity sensor, the first sensed signal carries a piece of distance information.

5. The handheld electronic apparatus of claim 1, wherein the processor is further configured to generate a second event signal in response to the interrupt signal, and the handheld electronic apparatus further comprises:
a second sensor, electrically connected to the processor, and configured to be turned on in response to the second event signal and generate a second sensed signal;
wherein the processor further generates a second comparison result by comparing the second sensed signal with a second threshold, and determines whether the button is triggered intentionally or accidentally according to combination of the first comparison result and the second comparison result.

6. A method for activating an application of a handheld electronic apparatus, comprising the following steps of:
(a) generating an interrupt signal in response to a button of the handheld electronic apparatus being triggered;
(b) turning on a first sensor of the handheld electronic apparatus in response to the interrupt signal;
(c) generating a first sensed signal by the first sensor;
(d) generating a first comparison result by comparing the first sensed signal with a first threshold; and
(e) determining whether the button is triggered intentionally according to the first comparison result.

7. The method of claim 6, further comprising the following step of:
turning off the first sensor in response to the button is determined as triggered accidentally.

8. The method of claim 6, further comprising the following steps of:
turning on a camera module of the handheld electronic apparatus in response to the button is determined as triggered intentionally; and
enabling a display unit of the handheld electronic apparatus to enter a preview mode of the camera module.

9. The method of claim 10, further comprising the following steps of:
unlocking the handheld electronic apparatus;
turning on the display unit in response to the button is determined as triggered intentionally; and
turning off the first sensor in response to the display unit is turned on.

10. The method of claim 6, wherein the first sensor is selected from at least one of the following: an ambient light sensor and the first sensed signal is a piece of ambient light; and a proximity sensor, the first sensed signal carries a piece of distance information.

11. The method of claim 6, further comprising the following steps of:
turning on a second sensor of the handheld electronic apparatus in response to the interrupt signal;
generating a second sensed signal by the second sensor; and
generating a second comparison result by comparing the second sensed signal with a second threshold;
wherein the step (e) determines whether the button is triggered intentionally according to combination of the first comparison result and the second comparison result.

12. A method for activating an application within a handheld electronic apparatus, comprising the following steps of:
(a) determining whether a hardware input unit is triggered;
(b) receiving at least one sensed signal from at least one sensor according to the determination result;
(c) generating a comparison result by comparing the at least one sensed signal with at least one predetermined threshold; and
(d) activating an application module corresponding to the hardware input device according to the comparison result.

13. The method of claim 12, further comprising the following step of:
unlocking the handheld electronic apparatus by bypassing an unlock operation;
turning on a display unit of the handheld electronic apparatus.

14. The method of claim 12, further comprising the following steps of:
activating at least one unit related to executions of the application module; and
turning off the at least one sensor.

15. The method of claim 14, further comprising the following step of:
performing a predetermined operation of the application module;
wherein the predetermined operation is configurable by a user of the handheld electronic apparatus.

16. A computer program product, comprising computer software code means configured to perform the steps of the method of any preceding claims 6-15.
